# EUROPEAN PATENT SPECIFICATION

(11) **EP 3 412 905 B1**
(45) Date of publication and mention of the grant of the patent: **15.12.2021**
(21) Application number: 18176371.5
(22) Date of filing: 06.06.2018
(51) Int. Cl.: F02M 59/44

(54) **DIESEL HP PUMP WITH DEBRIS COLLECTOR**
DIESEL-HP-PUMPE MIT SCHMUTZSAMMLER
POMPE HP DIESEL AVEC COLLECTEUR DE DÉBRIS

(30) Priority: 07.06.2017 GB 201709069
(43) Date of publication of application: 12.12.2018
(73) Proprietor: Delphi Technologies IP Limited, Saint Michael (BB)
(72) Inventor: McHATTIE, James T., Bean, Kent DA2 8AL (GB); MACLANE, Stephen, Joseph, Gillingham, Kent ME8 0RU (GB)
(74) Representative: Allain, Michel Jean Camille

(56) References cited:
- EP-A2- 2 597 295
- WO-A1-02/14680
- WO-A1-2017/037631
- DE-A1- 3 231 929
- DE-A1-102004 054 652
- DE-A1-102010 030 165
- DE-A1-102011 004 274
- US-A- 3 841 489

## Description

### TECHNICAL FIELD

The present invention relates to a diesel high pressure pump provided with a debris collector.

### BACKGROUND OF THE INVENTION

A diesel internal combustion engine provided with direct fuel injection equipment comprises a high pressure (HP) pump receiving low pressure fuel and compressing it to thousands of bars. Unfortunately, said fuel carries debris or manufacturing burrs and, some of said particles are not stopped by the filters arranged on the flow lines of the equipment, either because of a smaller size than the filter mesh, or flowing via a bypass channel arranged to enable cold start when said mesh is clogged with wax. More efficient devices are required to prevent damages and, it is essential to remove such particles to prevent severe damages to the pump and other components of the injection equipment. DE102011004274 and DE102004054652 discloses HP pumps relevant to the present invention.

### SUMMARY OF THE INVENTION

Accordingly, it is an object of the present invention to resolve the above mentioned problems in providing a high pressure pump of a diesel fuel injection equipment of an internal combustion engine, said pump having a housing with walls surrounding an inner space and being provided with an inner channel extending through said walls joining said inner space to a compression chamber, said inner channel comprising a recess. In use fuel enters from an inner end and exits via an opening in a lateral face, said inner end and opening defining a right angle and wherein, arranged in said recess, the HP pump further comprises a debris collector comprising a grid member and a magnetic member.

Also, said recess comprises an inner portion extending along a main axis from said inner end to an annular shoulder face joining a larger outer portion, said outer portion ultimately opening in an external face of the body, the grid member comprising a tubular portion at an end of which is formed a transverse annular collar, the tubular portion being inserted in said recess inner portion, the collar being arranged against said shoulder face.

Said grid member may integrally comprise a holding structure defining said collar and at least one leg and, a grid partially overmoulded in said holding structure and defining said tubular portion.

More precisely, said grid has a mesh of about 100 µm.

The magnetic member comprises a head from which extends a cylindrical stem, the head sealingly closing said recess, the stem extending inside the recess.

Said head is sealingly tightened in the recess outer portion compressing the collar of the grid member against the shoulder face and, said stem axially extending in said tubular portion of the grid member.

Said stem may be magnetic and adapted to attract, in use, metallic debris present in the fuel.

The stem may be provided with a blind bore opening at one end on the outer face of the head and defining an axial hollow in which is arranged a magnetic piece.

Said magnetic piece may be press-fitted or bonded or overmoulded inside said hollow.

The invention further extends to a method to clean a diesel HP pump as defined in any of the preceding claims, the method comprising the following steps:
- providing a HP pump and arranging the grid member,
- sealing the recess preventing any leaks,
- arranging the HP pump on a cleaning machine,
- flushing the pump by having a large fuel flow going through,
the sealing step comprising:
- sealing the recess with a non-magnetic plug that is used during the flushing step, said non-magnetic plug being afterward replaced by the final magnetic member.
- sealing the recess with the final plug and hollow stem assembly, said hollow stem being empty during the flushing step, the magnetic component being inserted in the hollow of the stem after the flushing step.

### BRIEF DESCRIPTION OF THE DRAWINGS

The present invention is now described by way of example with reference to the accompanying drawings in which:
Figure 1 is a sectional view of part of a HP pump provided with a debris collector as per a first embodiment of the invention.
Figure 2 is a 3D view of the debris collector of figure 1.
Figure 3 is similar to figure 1 with a debris collector as per a second embodiment of the invention.
Figures 4 and 5 are 3D views of the debris collector of figure 3.

### DESCRIPTION OF THE PREFERRED EMBODIMENTS

Diesel internal combustion engines are fueled with a direct injection equipment in which a high pressure pump 10 pressurises and delivers fuel to injectors. A debris collector 12 adapted to retain particles and metallic debris that may cause severe damages to the pump is arranged in said pump.

More precisely, the HP pump 10 has a housing 14 with walls surrounding an inner space S in which a camshaft (not shown) cooperates with a piston cyclically varying as per a pumping cycle the volume of a compression chamber in which fuel enters via an inner channel 16 joining said inner space S to said compression chamber. The debris collector 12 is arranged in said inner channel 16.

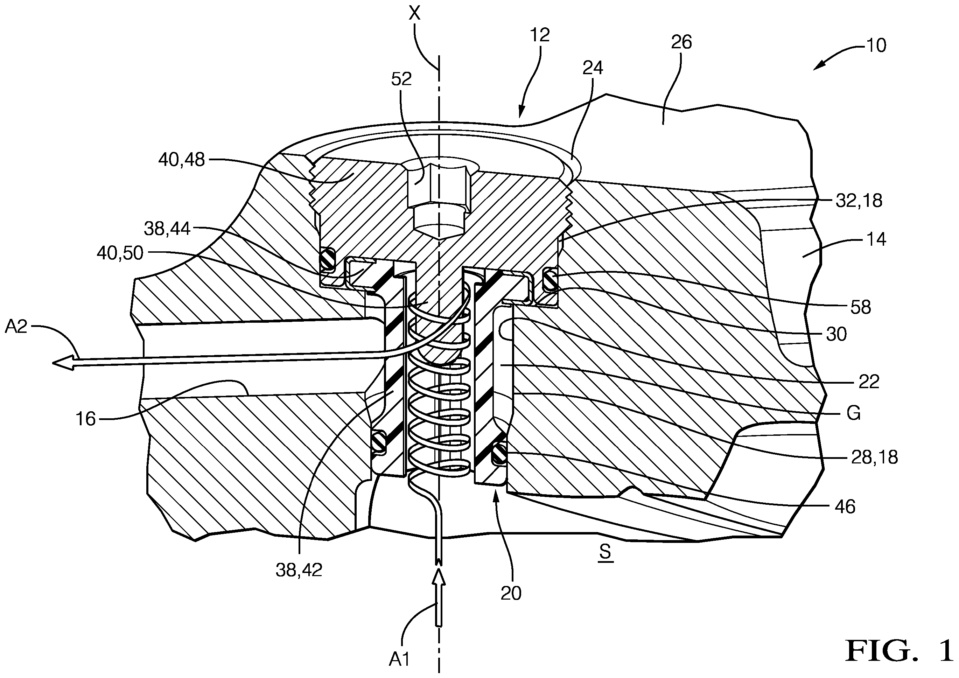

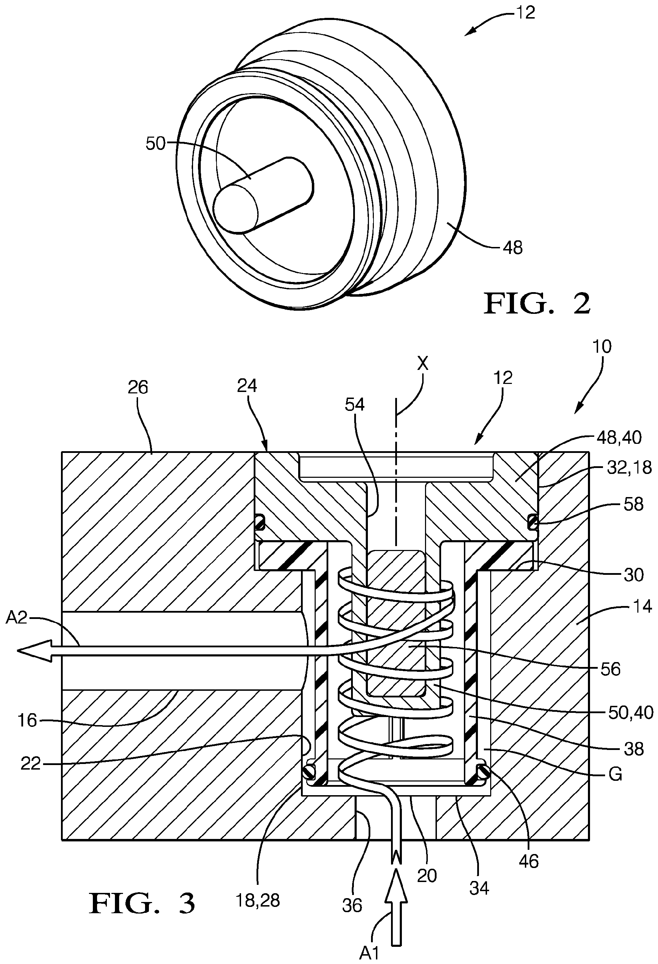

As shown on a first and a second embodiments respectively on figures 1 and 3, the inner channel 16 defines a large cylindrical recess 18, the fuel entry (arrow A1) from the inner space S being at an inner end 20 of said recess and, the fuel exit (arrow A2) extending from a lateral face 22 of the recess, this configuration defining a 90° angle of the path followed by the flow.

In details, the recess 18 opens at its inner end 20 in the inner space S and extends along a main axis X up to an opposite outer end 24 opening on an external face 26 of the housing 12. Between said inner 20 and outer 24 ends, the recess 18 extends in an inner cylindrical portion 28 widening via an annular shoulder face 30 in a larger outer cylindrical portion 32 threaded on its external face. As visible on figures, the lateral face 22 from which departs the fuel exit A2 is the lateral face of the recess inner portion 28.

In said first and second embodiments the recess differs in that in the first embodiment, the recess directly opens in the inner space S at its inner end 20 while, in the second embodiment the inner end 20 defines a transverse bottom face 34 at the center of which opens a narrower channel 36 joining the inner space S to the recess.

The debris collector 12 is arranged in the recess 22 and it comprises a grid member 38 and a magnetic member 40.

The grid member 38 is an integral component comprising a holding structure, typically molded in plastic, overmoulding a grid element, typically of nylon, and defining an axially X cylindrical tubular portion 42, inserted in the inner portion 28 of the recess defining with the lateral face 22 of the recess an annular gap G. At an end of said tubular portion, the grid member forms a transverse annular collar 44 extending in surface contact against the shoulder face 30 of the recess. A first O-ring 46 arranged close to the inner end 20 of the recess closes a fluid communication direct from the fuel entry A1 to the fuel exit A2 via said gap G. In the first embodiment of figure 1 and in the second embodiment of figure 3 said O-ring 46 is radially compressed between an annular groove provided in the holding structure and an area of said lateral face 22 close to the opening of the inner end 20. In any case, the fuel is forced to flow inside said tubular portion 38 then to pass through the grid, said first O-ring 46 closing any bypass of the grid.

The magnetic member 40 has a threaded head 48 from which axially extends an stem 50. The head 48 is complementary tightened in the outer portion 32 of the recess so it abuts the collar 44 and maintains it sandwiched between said head 48 and the shoulder face 30. On its external face, opposite the stem, the head 48 is provided with tool engagement means, a female hexagon 52 being the example of the embodiments while other means such as a slit, a male polygon... is possible. The stem 50 is magnetic and it axially extends inside the grid member 38.

In the first embodiment of figure 1 said head and stem are integral made of magnetic steel and, in the second embodiment of figure 3, the stem 50 is hollow, provided with a blind bore 54 opening on the external face of the head, the head and hollow stem being integrally moulded in plastic. Inside said blind bore 54 is press-fitted or bonded a magnetic piece 56.

To ensure sealing of the recess, a second O-ring 58 is arranged between the head and said face of the recess outer portion.

In use, the fuel enters the recess 18 which is large enough to slow down and disturb the flow, said turbulent flow inside the grid member 38 being represented by the curved double line arrow A1-A2. Metallic debris are attracted and stick on the magnetic stem 50 while other particles are retained by the grid prior to pass through said grid, joining the annular gap G and then exiting A2 toward the compression chamber.

Typically, the inner portion 28 of the recess has a length of about 40mm and a diameter of about 20mm. Also, the grid has a mesh of about 100µm. These dimensions are indicative and can be chosen larger or smaller depending on the overall flow capacity of the pump 10.

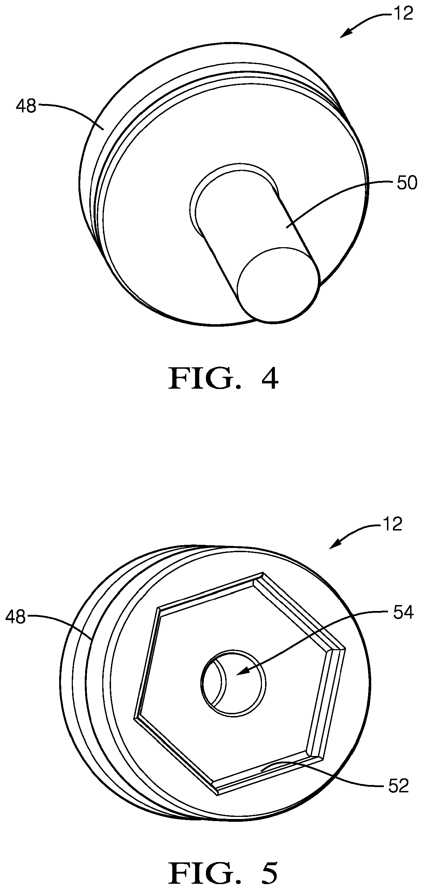

The first embodiment described, figure 1, shows the recess 18 directly opening in the inner space S and the integral steel-made magnetic member 40 and, the second embodiment, figures 3, 4, 5 shows the recess having a bottom face 34 with a magnetic member having a hollow stem and a magnetic piece 56. The alternatives consisting of having the recess of the first embodiment with the magnetic member of the second embodiment is possible as well as, having the recess of the second embodiment and the magnetic member of the first embodiment.

The pump 10 comprises numerous metallic components and, at the end of the production line the pump is cleaned to remove burrs and other debris that may remain from the manufacturing operations. Said cleaning operation is done by flushing a large quantity of fluid through the pump.

With the integral steel-made magnetic member, figures 1 and 2, said cleaning operation 100 comprises the following steps:
The diesel HP pump 10 is provided 110 and the grid member 38 is arranged 120 in the recess 18. Afterward, the recess 18 is closed and sealed 130 to prevent leaks. Said pump assembly is then arranged 140 in a specific cleaning machine where said pump is flushed 150 by having a large flow going through. At the end the grid member may be cleaned from any debris that have been retained.

More particularly, in the case of an integral steel-made magnetic member, the closing and sealing step 130 may be performed with a special non-magnetic plug that is afterward replaced by the final magnetic member. In the case of the second embodiment, the flushing operation may be performed without having the magnetic piece 56 in place, said magnetic piece 56 being arranged afterward.

### LIST OF REFERENCES

- S: inner space
- A1: fuel entry
- A2: fuel exit
- X: main axis
- G: annular gap

- 10: high pressure pump
- 12: debris collector
- 14: housing
- 16: inner channel
- 18: recess
- 20: inner end of the recess
- 22: lateral face
- 24: outer end of the recess
- 26: external face of the pump housing
- 28: inner portion of the recess
- 30: shoulder face
- 32: outer portion of the recess
- 34: bottom face of the recess
- 36: narrow channel
- 38: grid member
- 40: magnetic member
- 42: tubular portion
- 44: collar
- 46: first O-ring
- 48: head of the magnetic member
- 50: stem of the magnetic member
- 52: hexagon
- 54: bore
- 56: magnetic piece
- 58: second O-ring
- 100: method - cleaning operation
- 110: providing
- 120: arranging
- 130: sealing
- 132: sealing with a non-magnetic plug
- 134: replacing
- 136: inserting
- 140: arranging
- 150: flushing

## Claims

1. High pressure pump (10) of a diesel fuel injection equipment of an internal combustion engine, said pump (10) having a housing (14) with walls surrounding an inner space (S) and being provided with an inner channel (16) extending through said walls joining said inner space (S) to a compression chamber, said inner channel (16) comprising a recess (18) wherein, in use fuel enters (A1) from an inner end (20) and exits (A2) via an opening in a lateral face (22), said inner end (20) and opening defining a right angle and wherein, arranged in said recess (18), the HP pump further comprises a debris collector (12) comprising a grid member (38) and a magnetic member (54) and wherein,
said recess (18) comprises an inner portion (28) extending along a main axis (X) from said inner end (20) to an annular shoulder face (30) joining a larger outer portion (32), said outer portion (32) ultimately opening in an external face (26) of the housing (14), the grid member (38) comprising a tubular portion (42) at an end of which is formed a transverse annular collar (44), the tubular portion (42) being inserted in said recess inner portion (28), the collar (44) being arranged against said shoulder face (30),
wherein the magnetic member (40) comprises a head (48) from which extends a cylindrical stem (50), the head sealingly closing said recess, the stem extending inside the recess,
said head being sealingly tightened in the recess outer portion (32) compressing the collar (44) of the grid member against the shoulder face (30) and, said stem (50) axially extending in said tubular portion of the grid member.

2. HP pump (10) as claimed in claim 1 wherein said grid member (38) integrally comprises a holding structure defining said collar (44) and at least one leg and, a grid partially overmoulded in said holding structure and defining said tubular portion (42).

3. HP pump (10) as claimed in claim 2 wherein said grid has a mesh of about 100µm.

4. HP pump (10) as claimed in claim 1 wherein said stem (50) is magnetic and adapted to attract, in use, metallic debris present in the fuel.

5. HP pump (10) as claimed in claim 4 wherein the stem (50) is provided with a blind bore opening at one end on the outer face of the head and defining an axial hollow in which is arranged a magnetic piece (56).

6. HP pump (10) as claimed in claim 5 wherein said magnetic piece (54) is press-fitted or bonded or overmoulded inside said hollow.

7. Method (100) to clean a diesel HP pump (10) as claimed in any of the claims 1 to 4, the method comprising the following steps:
- providing (110) a HP pump and arranging (120) the grid member,
- sealing (130) the recess preventing any leaks,
- arranging (140) the HP pump on a cleaning machine,
- flushing (150) the pump by having a large fuel flow going through, and wherein, the sealing step (130) comprises:
- sealing (132) the recess with a non-magnetic plug that is used during the flushing step, said non-magnetic plug being afterward replaced (134) by the final magnetic member.

8. Method (100) as claimed in claim 7, the HP pump being as claimed in any of the claims 5 or 6, the sealing (130) step comprising:
- sealing (130) the recess with the final plug and hollow stem assembly, said hollow stem being empty during the flushing step, the magnetic component being inserted (136) in the hollow of the stem after the flushing step.

## Patentansprüche

1. Hochdruckpumpe (10) einer Dieselkraftstoffeinspritzeinrichtung eines Verbrennungsmotors, wobei die Pumpe (10) ein Gehäuse (14) mit einen Innenraum (S) umgebenden Wänden hat und mit einem durch die Wände verlaufenden Innenkanal (16) versehen ist, der den Innenraum (S) mit einer Kompressionskammer verbindet, wobei der Innenkanal (16) eine Aussparung (18) aufweist, in der, in Betrieb, Kraftstoff von einem inneren Ende (20) eintritt (A1) und über eine Öffnung in einer Seitenfläche (22) austritt (A2), wobei das innere Ende (20) und die Öffnung einen rechten Winkel definieren, und wobei die Hochdruckpumpe, die in der Aussparung (18) angeordnet ist, weiter einen Ablagerungssammler (12) aufweist, der ein Gitterelement (38) und ein magnetisches Element (54) aufweist, und wobei
die Aussparung (18) einen inneren Teil (28) aufweist, der sich entlang einer Hauptachse (X) von dem inneren Ende (20) zu einer ringförmigen Schulterfläche (30) erstreckt, die auf einen größeren äußeren Teil (32) trifft, wobei sich der äußere Teil (32) schließlich in einer Außenfläche (26) des Gehäuses (14) öffnet, wobei das Gitterelement (38) einen rohrförmigen Teil (42) aufweist, an dessen Ende ein quer verlaufender ringförmiger Kragen (44) ausgebildet ist, wobei der rohrförmige Teil (42) in den inneren Aussparungsteil (28) eingesetzt ist, wobei der Kragen (44) an der Schulterfläche (30) angeordnet ist,
wobei das magnetische Element (40) einen Kopf (48) aufweist, von dem sich ein zylindrischer Schaft (50) erstreckt, wobei der Kopf die Aussparung abdichtend verschließt, wobei sich der Schaft innerhalb der Aussparung erstreckt,
wobei der Kopf in dem äußeren Aussparungsteil (32) abdichtend angezogen ist, wodurch der Kragen (44) des Gitterelements gegen die Schulterfläche (30) gedrückt wird, und sich der Schaft (50) axial in dem rohrförmigen Teil des Gitterelements erstreckt.

2. Hochdruckpumpe (10) gemäß Anspruch 1, wobei das Gitterelement (38) integral eine Haltestruktur aufweist, die den Kragen (44) und zumindest einen Schenkel und ein Gitter definiert, das teilweise in die Haltestruktur eingeformt ist und den rohrförmigen Teil (42) definiert.

3. Hochdruckpumpe (10) gemäß Anspruch 2, wobei das Gitter eine Maschenweite von etwa 100 µm hat.

4. Hochdruckpumpe (10) gemäß Anspruch 1, wobei der Schaft (50) magnetisch ist und ausgebildet ist, um, in Betrieb, im Kraftstoff vorhandene metallische Ablagerungen anzuziehen.

5. Hochdruckpumpe (10) gemäß Anspruch 4, wobei der Schaft (50) mit einer Sacklochbohrungsöffnung an einem Ende an der Außenfläche des Kopfes versehen ist und einen axialen Hohlraum definiert, in dem ein Magnetstück (56) angeordnet ist.

6. Hochdruckpumpe (10) gemäß Anspruch 5, wobei das Magnetstück (54) in dem Hohlraum pressgepasst oder geklebt oder umspritzt ist.

7. Verfahren (100) zum Reinigen einer Dieselhochdruckpumpe (10) gemäß einem der Ansprüche 1 bis 4, wobei das Verfahren die folgenden Schritte aufweist:
- Vorsehen (110) einer Hochdruckpumpe und Anordnen (120) des Gitterelements,
- Abdichten (130) der Aussparung, um Leckagen zu vermeiden,
- Anordnen (140) der Hochdruckpumpe an einer Reinigungsmaschine,
- Spülen (150) der Pumpe, indem ein großer Kraftstofffluss durchgelassen wird, und wobei der Abdichtungsschritt (130) aufweist:
- Abdichten (132) der Aussparung mit einem nicht-magnetischen Stopfen, der während des Spülschritts verwendet wird, wobei der nicht-magnetische Stopfen anschließend durch das endgültige magnetische Element ersetzt wird (134).

8. Verfahren (100) gemäß Anspruch 7, wobei die Hochdruckpumpe wie in einem der Ansprüche 5 oder 6 beansprucht ist, wobei der Abdichtungsschritt (130) aufweist:
- Abdichten (130) der Aussparung mit der endgültigen Anordnung aus Stopfen und hohlem Schaft, wobei der hohle Schaft während des Spülschritts leer ist, wobei die magnetische Komponente nach dem Spülschritt in den Hohlraum des Schafts eingesetzt wird (136).

## Revendications

1. Pompe haute pression (10) d'un équipement d'injection de carburant diesel d'un moteur à combustion interne, ladite pompe (10) ayant un logement (14) avec des parois entourant un espace interne (S) et étant pourvue d'un canal interne (16) s'étendant à travers lesdites parois joignant ledit espace interne (S) à une chambre de compression, ledit canal interne (16) comprenant un évidement (18) dans lequel, lors de l'utilisation du carburant entre (A1) par une extrémité interne (20) et sort (A2) via une ouverture dans une face latérale (22), ladite extrémité interne (20) et ladite ouverture définissant un angle droit et, agencé dans ledit évidement (18), la pompe HP comprenant en outre un collecteur de débris (12) comprenant un élément de grille (38) et un élément magnétique (54) et où,
ledit évidement (18) comprend une portion interne (28) s'étendant le long d'un axe principal (X) de ladite extrémité interne (20) vers une face d'épaulement annulaire (30) joignant une portion externe plus grande (32), ladite portion externe (32) s'ouvrant finalement dans une face externe (26) du boîtier (14), l'élément de grille (38) comprenant une portion tubulaire (42) à une extrémité de laquelle est formé un collier annulaire transversal (44), la portion tubulaire (42) étant insérée dans ladite portion interne d'évidement (28), le collier (44) étant agencé contre ladite face d'épaulement (30),
l'élément magnétique (40) comprenant une tête (48) depuis laquelle s'étend une tige cylindrique (50), la tête fermant de façon hermétique ledit évidement, la tige s'étendant à l'intérieur de l'évidement,
ladite tête étant serrée de façon étanche dans la portion externe d'évidement (32) comprimant le collier (44) de l'élément de grille contre la face d'épaulement (30) et, ladite tige (50) s'étendant axialement dans ladite portion tubulaire de l'élément de grille.

2. Pompe HP (10) telle que revendiquée dans la revendication 1 où ledit élément de grille (38) comprend de façon solidaire une structure de maintien définissant ledit collier (44) et au moins une patte et, une grille partiellement surmoulée dans ladite structure de maintien et définissant ladite portion tubulaire (42).

3. Pompe HP (10) telle que revendiquée dans la revendication 2 où ladite grille a une maille d'environ 100µm.

4. Pompe HP (10) telle que revendiquée dans la revendication 1 où ladite tige (50) est magnétique et conçue pour attirer, lors de l'utilisation, des débris métalliques présents dans le carburant.

5. Pompe HP (10) telle que revendiquée dans la revendication 4 où la tige (50) est pourvue d'un alésage borgne s'ouvrant à une extrémité sur la face externe de la tête et définissant un creux axial dans lequel est agencée une pièce magnétique (56).

6. Pompe HP (10) telle que revendiquée dans la revendication 5 où ladite pièce magnétique (54) est ajustée par pression ou collée ou surmoulée à l'intérieur dudit creux.

7. Procédé (100) pour nettoyer une pompe HP diesel (10) telle que revendiquée dans l'une quelconque des revendications 1 à 4, le procédé comprenant les étapes suivantes :
- fournir (110) une pompe HP et agencer (120) l'élément de grille,
- étanchéifier (130) l'évidement pour empêcher toute fuite,
- agencer (140) la pompe HP sur une machine de nettoyage,
- rincer (150) la pompe en faisant passer à travers elle un grand écoulement de carburant,
et où l'étape d'étanchéification (130) comprend :
- l'étanchéification (132) de l'évidement avec un bouchon non magnétique qui est utilisé pendant l'étape de rinçage, ledit bouchon non magnétique étant remplacé ensuite (134) par l'élément magnétique final.

8. Procédé (100) tel que revendiqué dans la revendication 7, la pompe HP étant telle que revendiquée dans l'une quelconque des revendications 5 ou 6, l'étape d'étanchéification (130) comprenant :
- l'étanchéification (130) de l'évidement avec le bouchon final et l'ensemble tige creuse, ladite tige creuse étant vide pendant l'étape de rinçage, le composant magnétique étant inséré (136) dans le creux de la tige après l'étape de rinçage.
